# FASCICULE DE BREVET EUROPEEN

(11) **EP 2 247 475 B1**
(45) Date de publication et mention de la délivrance du brevet: **17.04.2013**
(21) Numéro de dépôt: 09709288.6
(22) Date de dépôt: 02.02.2009
(51) Int. Cl.: B60S 1/52

(54) **PROCEDE DE FABRICATION D'UNE RAMPE DE DISTRIBUTION DE LIQUIDE DE LAVAGE, BALAI D'ESSUIE-GLACE ET DISPOSITIF D'ESSUYAGE MUNIS D'UNE RAMPE OBTENUE PAR LE PROCEDE**
VERFAHREN ZUR HERSTELLUNG EINER AUSGABELEITUNG FÜR EINE WASCHFLÜSSIGKEIT, WISCHERBLATT UND WISCHVORRICHTUNG MIT EINER AUSGABELEITUNG, DIE MIT DEM VERFAREN HERGESTELLT WIRD
METHOD FOR MAKING A WASHING LIQUID DISPENSING LINE, WIPER BLADE AND WIPING DEVICE PROVIDED WITH A DISPENSING LINE OBTAINED FROM SAID METHOD

(30) Priorité: 07.02.2008 FR 0800639
(43) Date de publication de la demande: 10.11.2010
(73) Titulaire: Valeo Systèmes d'Essuyage, 78321 La Verrière (FR)
(72) Inventeur: CAILLOT, Gérald, 78720 Cernay La Ville (FR)
(74) Mandataire: Rosolen-Delarue, Katell
(86) Numéro de dépôt international: PCT/EP2009/051155
(87) Numéro de publication internationale: WO 2009/098183

(56) Documents cités:
- DE-A1- 2 923 781
- DE-A1-102005 030 972
- FR-A- 2 747 981
- FR-A- 2 748 437
- GB-A- 2 331 258

## Description

L'invention a pour objet un procédé de fabrication d'une rampe de distribution de liquide de lavage, en particulier pour le nettoyage de vitres de véhicules automobiles. Elle a également pour objet un balai d'essuie-glace ainsi qu'un dispositif d'essuyage munis d'une rampe obtenue par le procédé.

Les difficultés rencontrées avec les dispositifs lave-glace classiques pour obtenir une répartition régulière du liquide de lavage sur des pare-brises, notamment du fait de l'action du vent et de la vitesse du véhicule ont amené les constructeurs automobiles à prévoir des rampes de distribution du liquide de lavage sur les balais d'essuie-glace eux-mêmes. Les rampes de distribution du liquide se déplacent alors en même temps que l'essuie-glace et projettent le liquide de lavage au plus près du pare-brise au niveau même de la zone à laver et/ou nettoyer.

Les premières rampes développées, comme celle décrite dans le document FR 2 728 217, étaient généralement destinées à des balais à palonniers, et étaient réalisées en matière rigide.

Le développement de nouveaux balais, destinés à mieux épouser la forme des pare-brises, comme les balais plats, également appelés « flat blades » en langue anglaise, a conduit les constructeurs à utiliser des matériaux souples, comme par exemple le caoutchouc, pour la réalisation de ces rampes.

Ces rampes sont généralement constituées, tel que décrit dans les documents DE 10 2005 030 972 et FR 2 748 437 A, d'un conduit longitudinal cylindrique de distribution de liquide en matériau souple muni d'orifices de projection du liquide.

La formation des orifices de projection dans le conduit de distribution de liquide, appelée perçage du conduit, est réalisée à l'aide d'un outil, qui peut être un foret ou une aiguille. On utilise de préférence une aiguille, car la réalisation d'orifices à l'aide d'une aiguille s'effectue sans enlèvement de matière. L'orifice se referme alors après le perçage du conduit, ce qui évite des pertes de liquide. En fonctionnement, les orifices s'ouvrent et se ferment grâce à la pression du liquide de lavage et l'élasticité du caoutchouc.

Lors de la formation de l'orifice, on commence par appuyer avec l'outil sur le conduit. Une difficulté qui peut apparaître, en particulier lorsque l'outil est une aiguille, est que l'appui de l'outil entraîne un écrasement du conduit, sans qu'il y ait formation d'un orifice. Il se peut également que l'outil vienne percer le conduit de part en part, ce qui conduit à des pertes de liquide non souhaitées.

La présente invention a pour objectif de remédier à ces inconvénients.

En particulier, la présente invention propose un procédé de fabrication d'une rampe de distribution de liquide de lavage comprenant un conduit de distribution et de projection du liquide de lavage en matériau souple, le conduit présentant des orifices de projection du liquide, le procédé permettant de réaliser aisément les orifices de projection, en particulier à l'aide d'une aiguille, sans risque d'échouer au perçage ou de percer le conduit de part en part.

L'invention a ainsi pour objet un procédé de fabrication d'une rampe de distribution de liquide de lavage du type comprenant un conduit longitudinal de distribution et de projection du liquide de lavage en matériau souple présentant des orifices de projection du liquide reliant l'intérieur du conduit à l'extérieur du conduit et disposés le long du conduit.

Le procédé selon l'invention comprend :
- une étape de fabrication d'un conduit initial longitudinal en matériau souple présentant, sur au moins certaines parties, une paroi interne de section transversale de forme allongée selon un axe transversal, le conduit initial présentant, sur lesdites parties, une zone de section transversale amicale située au voisinage de l'axe transversal, et
- une étape de formation du conduit de distribution et de projection du liquide, par la réalisation d'orifices de projection dans au moins certaines desdites parties du conduit initial, chaque orifice étant réalisé dans la zone amincie à l'aide d'un outil traversant le conduit initial, depuis l'extérieur du conduit initial jusqu'à l'intérieur du conduit initial, dans une zone située au voisinage de l'axe transversal et selon une direction sensiblement parallèle audit axe.

Ainsi, dans le procédé selon l'invention, les orifices sont réalisés sur des parties du conduit initial qui présentent une section transversale de forme allongée. Cet allongement permet d'augmenter la course de l'outil à l'intérieur du conduit initial, par rapport aux conduits de section circulaire de l'état de la technique, ce qui évite le risque de percer la paroi opposée.

En outre, même si la section du conduit se déforme lors de l'appui de l'outil sur le conduit initial, l'outil peut percer l'orifice grâce à la plus grande course possible sans risque de percer le conduit de part en part.

De préférence, lesdites parties constituent l'ensemble du conduit initial. L'ensemble du conduit initial présente de cette façon une section transversale de forme allongée, ce qui permet une fabrication simplifiée de la rampe.

La présence de la zone amincie, selon l'invention, permet de réduire la déformation du conduit initial lors de la réalisation de l'orifice ce qui facilite cette réalisation.

Le conduit initial présente avantageusement, sur lesdites parties, et au voisinage de l'axe transversal, une partie de section transversale sensiblement orthogonale à l'axe transversal, chaque orifice étant ensuite réalisé dans ladite partie.

L'outil peut être une-aiguille ou un foret, de préférence une aiguille.

L'invention a également pour objet un balai d'essuie-glace, comprenant au moins une rampe obtenue par le procédé décrit ci-dessus.

Le balai comprend avantageusement deux rampes, positionnées de chaque côté du balai, de façon à obtenir une répartition régulière du liquide de lavage sur le pare-brise.

La ou les rampes font avantageusement partie d'un élément du balai d'essuie-glace formant déflecteur aérodynamique.

L'invention a enfin pour objet un dispositif d'essuyage, du type comprenant un balai d'essuie-glace monté sur un bras d'essuyage et au moins une rampe de distribution de liquide de lavage, la rampe étant obtenue par le procédé décrit ci-dessus.

Le balai est avantageusement un balai décrit ci-dessus.

La rampe est dans certaines applications disposée sur et/ou intégrée au bras.

D'autres avantages et caractéristiques de l'invention apparaîtront à la lecture de la description suivante, donnée uniquement à titre d'exemple nullement limitatif, et faite en référence aux dessins annexés, qui sont des vues en coupes transversales, et sur lesquels :
- la figure 1 illustre différentes étapes d'un procédé de fabrication d'une rampe de distribution de liquide de lavage,
- la figure 2 illustre une étape du procédé, selon l'invention, conformément à un premier mode de réalisation de l'invention, et
- la figure 3 illustre un balai d'essuie-glace muni de rampes de distribution de liquide de lavage.

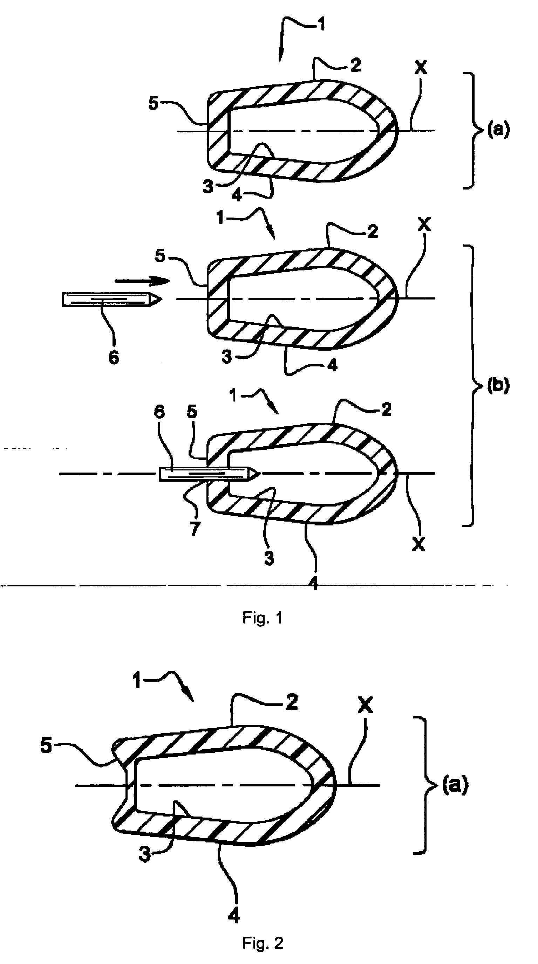

Lors d'une première étape (a) de fabrication de la rampe de distribution 1, telle qu'illustrée à la figure 1 présentant une vue en coupe de la rampe 1, on fabrique un conduit initial 2 longitudinal en matière élastique, par exemple en élastomère, avantageusement par extrusion. Le conduit initial 2 présente sur toute sa longueur une paroi interne 3 de section transversale de forme allongée selon un axe transversal X. Il présente également une paroi externe 4 de section de forme similaire à celle de la paroi interne 3.

Le conduit 2 présente globalement une section en forme de U, ou de fer à cheval, fermée par une partie 5 pouvant être droite, dite zone de perçage, et qui présente une section transversale sensiblement orthogonale à l'axe transversal X.

Lors d'une deuxième étape (b), on amène un outil formant moyen de perçage, ici une aiguille 6, à proximité du conduit initial en regard de la zone de perçage 2. On forme un orifice 7 à l'aide de l'aiguille 6, qui traverse le conduit initial 2 depuis l'extérieur du conduit initial 2 jusqu'à l'intérieur du conduit initial 2. Le perçage du conduit 2 a lieu dans la zone de perçage 5 du conduit initial 2, au voisinage de l'axe transversal X et selon une direction sensiblement parallèle à l'axe transversal X.

Lors de la formation de l'orifice 7, l'aiguille 6 traverse facilement le conduit initial 2. En effet, grâce à la forme allongée de la paroi interne 3, la distance entre le point d'impact de l'aiguille 6 sur le conduit initial 2 et le fond du conduit initial 2 est augmentée, par rapport aux conduits de section circulaires de l'état de la technique. Cette augmentation de la course possible de l'aiguille 6 dans le conduit initial 2 diminue les risques de perçage du conduit initial 2 de part et d'autre. En outre, même si la section du conduit initial 2 se déforme, le perçage est assuré grâce à la plus grande course possible de l'aiguille 6.

Le perçage du conduit initial 2 a lieu de préférence au niveau de l'axe transversal X, mais l'aiguille 6 peut également être appliquée sur un voisinage de l'axe transversal X, du moment qu'elle bénéficie d'une course longue à l'intérieur du conduit initial 2. De même, la direction de perçage est idéalement celle de l'axe transversal X, mais elle peut s'en écarter légèrement, du moment que l'aiguille bénéficie d'une course allongée.

Dans une autre mode de réalisation illustré à la figure 2, sur laquelle les éléments identiques à ceux de la figure 1 portent les mêmes références, le conduit initial 2 est fabriqué de façon à ce que, au niveau de la zone de perçage 5, le conduit initial 2 présente localement une section plus fine, de préférence au voisinage de l'axe transversal X. Cette section amincie permet de réduire la déformation du conduit initial 2 lors de l'application de l'aiguille 6, ce qui facilite le perçage du conduit initial 2.

La formation de l'orifice 7 peut également être réalisée avec tout outil approprié, par exemple avec un foret.

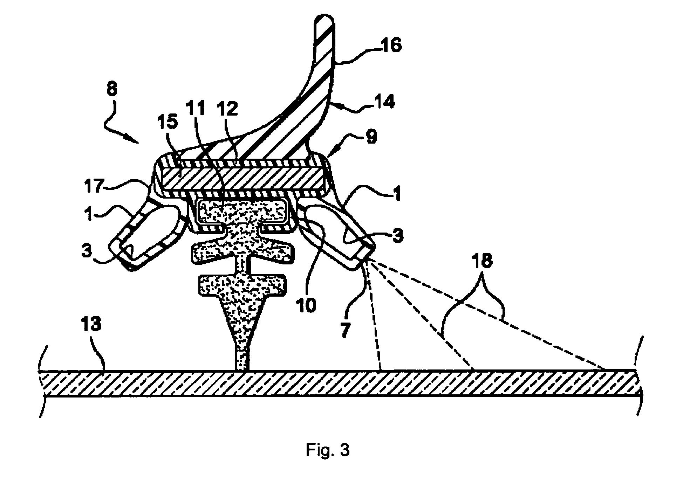

La figure 3 montre un balai d'essuie-glace 8 muni de deux rampes 1.

Le balai 8 comprend une monture de support 9 d'orientation principale longitudinale, qui comporte des moyens inférieurs de support 10 d'une lame d'essuyage 11 et un corps tubulaire 12 d'axe principal longitudinal qui est délimité par une paroi horizontale supérieure, une paroi horizontale inférieure et par deux parois latérales longitudinales verticales.

Le corps central tubulaire 12, par exemple réalisé par extrusion en matière plastique rigide ou semi-rigide, présente une symétrie générale de conception par rapport à un plan vertical médian qui est aussi le plan de symétrie de la lame d'essuyage. Le corps central 12 délimite un logement interne creux de contour rectangulaire dans lequel est reçu un élément de rigidification 15 longitudinal central, appelé vertèbre, qui en association avec le corps central 12, constitue la structure du balai 8 de type « flat-blade ». Cette structure particulière confère au balai 8 une élasticité dans le plan vertical et longitudinal lui permettant de s'adapter à la conformation, et notamment au galbe, de la face externe d'une vitre 13 à essuyer.

Les deux rampes 1 font avantageusement partie d'un dispositif global de distribution et de projection de liquide de lavage 14 qui est disposé longitudinalement sur le corps central 12. Le dispositif 14, réalisé en un matériau élastique, par exemple en élastomère, comprend, dans le cas présent, une partie supérieure 16 formant déflecteur aérodynamique qui s'étend longitudinalement au-dessus du corps central 12.

Le dispositif 14 comprend également une partie inférieure 17, solidaire de la partie supérieure 16, et qui est munie des deux rampes 1. Les deux rampes 1 sont disposées de chaque côté du corps central 12, et prennent chacune appui sur les parois latérales longitudinales verticales du corps central 12.

La partie inférieure 16 et la patrie supérieure 17 du dispositif 14 peuvent être co-extrudées avec le corps central 12. On peut également envisager que la partie supérieure 16 formant déflecteur aérodynamique est disposée à glissement, par exemple sur un évidement supérieur à fond horizontal plat du corps central 12.

Bien entendu, il est possible d'envisager un découplage entre les parties supérieures 16 et inférieures 17 du dispositif 14 de sorte que la rampe 1 et le déflecteur 16 soient indépendant l'un de l'autre.

Par ailleurs, il est également envisageable de n'utiliser qu'une rampe de distribution au lieu de deux rampes.

Les deux rampes 1 présentent une paroi interne 3 de section transversale de forme allongée. Les rampes 1 sont destinées à acheminer un liquide de lavage le long du balai d'essuie-glace. Ce liquide de lavage, après distribution est ensuite projeté sur la vitre 13 sous forme de jets 18 via des orifices 7.

Bien que les rampes 1 obtenues par le procédé selon l'invention aient été représentées dans un balai 8 de type « flat blade », elles peuvent être disposées sur tout type de balai, ainsi que sur tout type de bras d'essuie-glace.

## Revendications

1. Procédé de fabrication d'une rampe (1) de distribution de liquide de lavage du type comprenant un conduit longitudinal de distribution et de projection du liquide de lavage présentant des orifices (7) de projection du liquide reliant l'intérieur dudit conduit à l'extérieur dudit conduit et disposés le long dudit conduit, **caractérisé en ce qu'**il comprend :
- une étape de fabrication d'un conduit initial (2) longitudinal présentant, sur au moins certaines parties, une paroi interne (3) de section transversale de forme allongée selon un axe transversal (X), le conduit initial (2) présentant, sur lesdites parties, une zone de section transversale amincie située au voisinage de l'axe transversal (X), et
- une étape de formation du conduit de distribution et de projection du liquide, par la réalisation d'au moins un orifice de projection (7) dans au moins certaines desdites parties du conduit initial (2), chaque orifice (7) étant réalisé dans la zone amincie à l'aide d'un outil (6) traversant le conduit initial (2), depuis l'extérieur du conduit initial (2) jusqu'à l'intérieur du conduit initial (2), selon une direction sensiblement parallèle audit axe (X).

2. Procédé selon la revendication 1, **caractérisé en ce que** lesdites parties, présentant une paroi interne (3) de section transversale de forme allongée, constituent l'ensemble du conduit initial (2).

3. Procédé selon la revendication 1 ou 2, **caractérisé en ce que** le conduit initial (2) présente, sur lesdites parties, et au voisinage de l'axe transversal (X), une partie (5) de section transversale sensiblement orthogonale à l'axe transversal (X), et **en ce que** l'orifice (7) est réalisé dans ladite partie (5).

4. Procédé selon l'une des revendications 1 à 3, **caractérisé en ce que** l'outil (6) est une aiguille ou un foret.

5. Balai d'essuie-glace (8), **caractérisé en ce qu'**il comprend au moins une rampe (1) de distribution obtenue par un procédé selon l'une des revendications 1 à 4.

6. Balai d'essuie-glace (8) selon la revendication 5, **caractérisé en ce qu'**il comprend deux rampes (1), positionnées de chaque côté du balai (8).

7. Balai d'essuie-glace (8) selon la revendication 5 ou 6, **caractérisé en ce que** la rampe (1) fait partie d'un dispositif (14) du balai d'essuie-glace formant déflecteur aérodynamique (16).

8. Dispositif d'essuyage, du type comprenant un balai d'essuie-glace (8) monté sur un bras d'essuyage et au moins une rampe (1) de distribution de liquide de lavage, **caractérisé en ce que** la rampe (1) est obtenue par un procédé selon l'une des revendications 1 à 4.

9. Dispositif d'essuyage selon la revendication 8, **caractérisé en ce que** le balai d'essuie-glace (8) est conforme à l'une quelconque des revendications 5 à 7.

10. Dispositif d'essuyage selon la revendication 8, **caractérisé en ce que** la rampe (1) est disposée sur et/ou intégrée au bras d'essuyage.

## Claims

1. Method for manufacturing a spray bar (1) for distributing washing liquid of the type comprising a longitudinal duct for distributing and spraying the washing liquid having orifices (7) for spraying the liquid connecting the inside of the said duct to the outside of the said duct and placed along the said duct, **characterized in that** it comprises:
- a step of manufacturing an initial longitudinal duct (2) having, on at least certain portions, an inner wall (3) with a cross section of elongate shape along a transverse axis (X), the initial duct (2) having, on the said portions a zone with a thinned cross section situated in the vicinity of the transverse axis (X), and
- a step of forming the duct for distributing and spraying the liquid, by the production of at least one spraying orifice (7) in at least certain of the said portions of the initial duct (2), each orifice (7) being produced in the thinned zone with the aid of a tool (6) passing through the initial duct (2), from the outside of the initial duct (2) to the inside of the initial duct (2), in a direction substantially parallel to the said axis (X).

2. Method according to Claim 1, **characterized in that** the said portions, having an inner wall (3) with a cross section of elongate shape, form the whole of the initial duct (2).

3. Method according to Claim 1 or 2, **characterized in that** the initial duct (2) has, on the said portions, and in the vicinity of the transverse axis (X), a portion (5) with a cross section substantially orthogonal to the transverse axis (X), and **in that** the orifice (7) is produced in the said portion (5).

4. Method according to one of Claims 1 to 3, **characterized in that** the tool (6) is a needle or a drill bit.

5. Windscreen wiper blade (8), **characterized in that** it comprises at least one distribution spray bar (1) obtained by a method according to one of Claims 1 to 4.

6. Windscreen wiper blade (8) according to Claim 5, **characterized in that** it comprises two spray bars (1) positioned on each side of the blade (8).

7. Windscreen wiper blade (8) according to Claim 5 or 6, **characterized in that** the spray bar (1) forms part of a device (14) of the windscreen wiper blade forming an aerodynamic deflector (16).

8. Wiping device, of the type comprising a windscreen wiper blade (8) mounted on a wiper arm and at least one spray bar (1) for distributing washing liquid, **characterized in that** the spray bar (1) is obtained by a method according to one of Claims 1 to 4.

9. Wiping device according to Claim 8, **characterized in that** the windscreen wiper blade (8) conforms to any one of Claims 5 to 7.

10. Wiping device according to Claim 8, **characterized in that** the spray bar (1) is placed on and/or incorporated into a wiper arm.

## Patentansprüche

1. Verfahren zur Herstellung eines Verteilerrohrs (1) von Waschflüssigkeit von der Art, die einen Längskanal zur Verteilung und zum Spritzen der Waschflüssigkeit enthält, der Öffnungen (7) zum Spritzen der Flüssigkeit aufweist, die das Innere des Kanals mit der Außenumgebung des Kanals verbinden und entlang des Kanals angeordnet sind, **dadurch gekennzeichnet, dass** es enthält:
- einen Schritt der Herstellung eines Ausgangslängskanals (2), der zumindest in bestimmten Bereichen eine Innenwand (3) mit einem Querschnitt von gemäß einer Querachse (X) länglicher Form aufweist, wobei der Ausgangskanal (2) in den Bereichen eine Zone mit einem verjüngten Querschnitt aufweist, der sich in der Nähe der Querachse (X) befindet, und
- einen Schritt des Bildens des Kanals zur Verteilung und zum Spritzen der Flüssigkeit durch die Herstellung mindestens einer Spritzöffnung (7) in mindestens bestimmten der Bereiche des Ausgangskanals (2), wobei jede Öffnung (7) in der verjüngten Zone mit Hilfe eines Werkzeugs (6) hergestellt wird, das den Ausgangskanal (2) von der Außenseite des Ausgangskanals (2) bis zur Innenseite des Ausgangskanals (2) gemäß einer Richtung im Wesentlichen parallel zur Achse (X) durchquert.

2. Verfahren nach Anspruch 1, **dadurch gekennzeichnet, dass** die Bereiche, die eine Innenwand (3) mit einem Querschnitt länglicher Form aufweisen, die Gesamtheit des Ausgangskanals (2) bilden.

3. Verfahren nach Anspruch 1 oder 2, **dadurch gekennzeichnet, dass** der Ausgangskanal (2) in den Bereichen und in der Nähe der Querachse (X) einen Bereich (5) mit einem Querschnitt im Wesentlichen orthogonal zur Querachse (X) aufweist, und dass die Öffnung (7) in dem Bereich (5) hergestellt wird.

4. Verfahren nach einem der Ansprüche 1 bis 3, **dadurch gekennzeichnet, dass** das Werkzeug (6) eine Nadel oder ein Bohrer ist.

5. Scheibenwischer (8), **dadurch gekennzeichnet, dass** er mindestens ein Verteilerrohr (1) enthält, das durch ein Verfahren nach einem der Ansprüche 1 bis 4 erhalten wird.

6. Scheibenwischer (8) nach Anspruch 5, **dadurch gekennzeichnet, dass** er zwei Rohre (1) enthält, die auf jeder Seite des Wischers (8) angeordnet sind.

7. Scheibenwischer (8) nach Anspruch 5 oder 6, **dadurch gekennzeichnet, dass** das Rohr (1) Teil einer Vorrichtung (14) des Scheibenwischers ist, die einen aerodynamischen Abstreifer (16) bildet.

8. Wischvorrichtung von der Art, die einen Scheibenwischer (8), der auf einen Wischerarm montiert ist, und mindestens ein Verteilerrohr (1) von Waschflüssigkeit enthält, **dadurch gekennzeichnet, dass** das Rohr (1) durch ein Verfahren nach einem der Ansprüche 1 bis 4 erhalten wird.

9. Wischvorrichtung nach Anspruch 8, **dadurch gekennzeichnet, dass** der Scheibenwischer (8) einem der Ansprüche 5 bis 7 entspricht.

10. Wischvorrichtung nach Anspruch 8, **dadurch gekennzeichnet, dass** das Rohr (1) auf dem Wischerarm angeordnet und/oder eingebaut ist.
